# EUROPEAN PATENT APPLICATION

(11) **EP 4 745 396 A1**
(43) Date of publication of application: **20.05.2026**
(21) Application number: 25216828.1
(22) Date of filing: 19.11.2025
(51) Int. Cl.: F03D 1/00, F03D 13/10, F03D 13/20, F03D 80/00, F03D 80/70

(54) **SUPPORT STRUCTURE FOR DRIVE TRAIN OF A WIND TURBINE**

(30) Priority: 19.11.2024 IN 202421089437
(71) Applicant: Suzlon Energy Ltd., Gujarat, Ahmedabad 380009 (IN)
(72) Inventor: Volkmann, Jens, 18057 Rostock (DE); Reimer, Christian, 18057 Rostock (DE); Seitz-Meyer, Martin, 18057 Rostock (DE); Meyer-Bothling, Jörg, 18057 Rostock (DE); Rothemund, Karsten, 18057 Rostock (DE)
(74) Representative: Dornbrack, Tino

(57) **Abstract**

A support structure for drive train of a wind turbine comprises a top surface (18) and bottom surface (19), characterized in that at bottom surface (19) an integrated distance ring (30) for stiffening the main frame (17) is arranged.

## Description

This application claims the benefit of priority of Indian patent application 202421089437, filed 19th of November 2024, the entire contents of which are incorporated herein by reference.

### FIELD OF INVENTION

The present invention is directed to a support structure for drive train of a wind turbine, a support structure assembly and a wind turbine having a support structure for drive train.

### BACKGROUND

In known prior art support structures like main frame or also called bed frame of a wind turbine comprises a distance plate, wherein this distance plate is formed as a separate part, which is screwed to bottom surface of main frame. Often the distance plate is segmented in plurality of pieces.

Such distance plate is less functional, especially has no stiffening properties.

### OBJECT OF THE INVENTION

An object of the present invention is to provide an improved stiffness of support structure.

### SUMMARY OF THE INVENTION

An aspect of the present invention is directed to a support structure for drive train of a wind turbine.

The support structure for drive train of a wind turbine comprises a top surface and a bottom surface, wherein at bottom surface an integrated distance ring for stiffening the support structure is arranged.

Advantageously, the integrated distance ring increases the stiffness of support structure, stiffening of yaw system, ensuring of design space for gear rim and providing an interface for another structural component as well as ensuring of coaxial alignment of gear rim.

In a preferred embodiment of support structure for drive train of a wind turbine, the integrated distance ring is integral formed with the main frame.

In a preferred embodiment of the support structure for drive train of a wind turbine, the integrated distance ring and main frame are one-piece cast.

In a preferred embodiment of the support structure for drive train of a wind turbine, the integrated distance ring has axial bores for attaching a lock plate.

In a preferred embodiment of the support structure for drive train of a wind turbine, the integrated distance ring has radial bores for aligning and/or positioning components of yaw system.

Advantageously, the components of the yaw system can be a gear rim, a lock plate, friction pads or other components or a combination of them. The integrated distance ring allows improved alignment, positioning and/or attaching these components to the integrated distance ring. This accelerates the assembly procedure and saves costs.

In a preferred embodiment of the support structure for drive train of a wind turbine, on top surface a stiffening plate is arranged.

In a preferred embodiment of the support structure for drive train of a wind turbine, between the top and bottom surface at least one stiffening rib is arranged.

Advantageously, depending on size and loads 1-3 or more stiffening ribs are possible.

In a preferred embodiment of the support structure for drive train of a wind turbine, the integrated distance ring has a closed ring shape.

Another embodiment is directed to a support structure assembly for drive train of a wind turbine.

The support structure assembly comprising said support structure having said integrated distance ring and at least one component of yaw system, which is aligned and/or positioned to the integrated distance ring.

Another embodiment is directed to a wind turbine.

A wind turbine comprising a nacelle which comprises a main frame having an integrated distance ring.

### BRIEF DESCRIPTION OF DRAWINGS

The invention will now be explained more in detail with respect to exemplary embodiments with reference to the enclosed drawings, wherein:
- **Figure 1**: shows a schematic view of a wind turbine;
- **Figure 2**: shows an isometric view of a main frame;
- **Figure 3**: shows a bottom side view of the main frame;
- **Figure 4**: shows a section view of the main frame and
- **Figure 5**: shows a bottom side view of main frame assembly.

The foregoing and other aspects will become apparent from the following detailed description of the invention when considered in conjunction with the accompanying drawing figures.

### DETAILED DESCRIPTION OF THE INVENTION

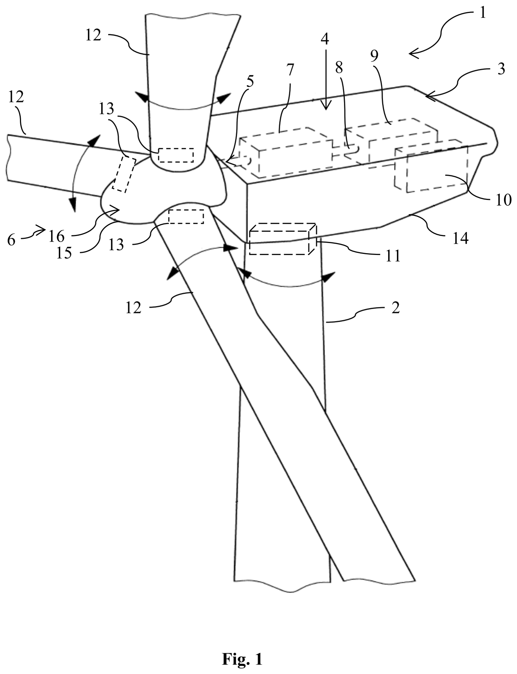

Figure 1 depicts a schematic view of a wind turbine 1 with a tower 2 and a nacelle 3. Depending on given requirements the wind turbine 1 can be used for offshore or onshore applications. The nacelle 3 is rotatable mounted on the tower 2 which is indicated by a double arrow at the tower 2. The nacelle 3 incorporates several components like a drive train chain 4 comprising a rotor shaft 5 (also known as slow-speed-shaft) connecting a rotor 6 with a gear box 7. A high-speed-shaft 8 connects the gear box 7 with a generator 9. The generator 9 is connected to a plurality of electrical components indicated by box 10. Further, the nacelle 3 comprises a yaw system 11 for rotating the nacelle 3, indicated by double arrow at tower 2. The rotor 6 comprises three rotor blades 12 which are mounted to a hub body (not shown). Latter is connected to the rotor shaft 5 of the drive train chain 4. The rotor blades 12 are adjustably mounted on the hub body indicated by double arrows at the rotor blade 12. This is realized by means of pitch drives, said pitch drives (not shown) being part of a pitch system 13. The pitch system 13 controls the rotor speed to given set points. By means of pitch-drives, the rotor blades 12 may be moved about corresponding rotor blade axis into different pitch positions which are indicated by double arrows at the rotor blade 12. Said rotor blade axis extends in an axial direction of the rotor blades 12. Each rotor blade 12 is connected to the hub body via its blade bearing (not shown). The nacelle 3 is covered by a nacelle cover 14. The hub body is covered by a hub housing 15, wherein the hub body and hub housing 15 forming a hub 16.

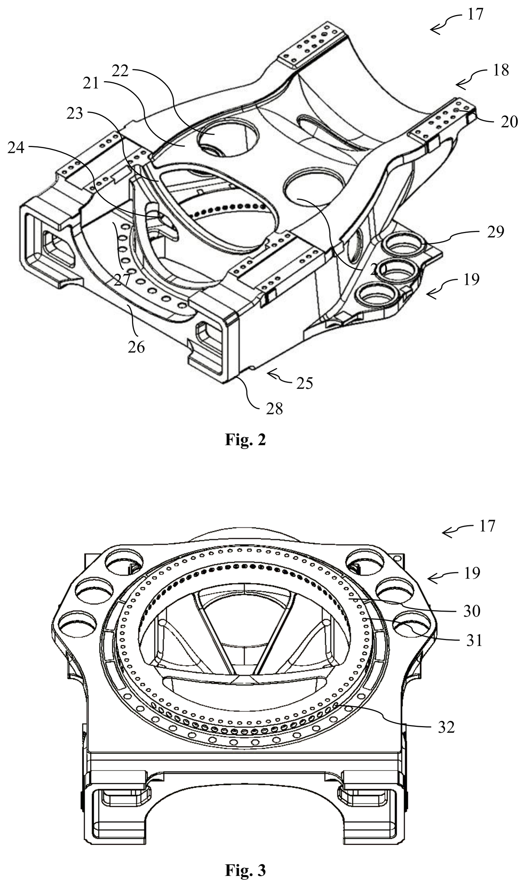

Figure 2 depicts a support structure like a main frame 17 arranged in the nacelle 3. The main frame 17 comprises a top surface 18 and a bottom surface 19. The top surface 18 comprises several attachment areas 20 for attaching at least one bearing housing of main bearing and gearbox 7, as well as a generator frame (not shown). Between the side areas at top surface 18 of the main frame 17 a stiffening plate 21 for stiffening top surface 18 of the main frame 17 extends. This stiffening plate 21 is arranged in the middle section of the main frame 17. Further, this stiffening plate 21 comprises two openings 22. Further, between the side areas as well as between the top surface 18 and bottom surface 19 a stiffening rib 23 extends. Latter having recesses 24 at the side through which cables can run (not shown). At generator-sided end 25 a further stiffening element 26 is arranged. This also has recesses 27 at the side, where cables can run through (not shown). In this area the attachment area 20 radial bores 28 are arranged for attaching generator frame (not shown). At the bottom side 19 of the main frame 17 a plurality of yaw drives interface 29 are arranged at both sides.

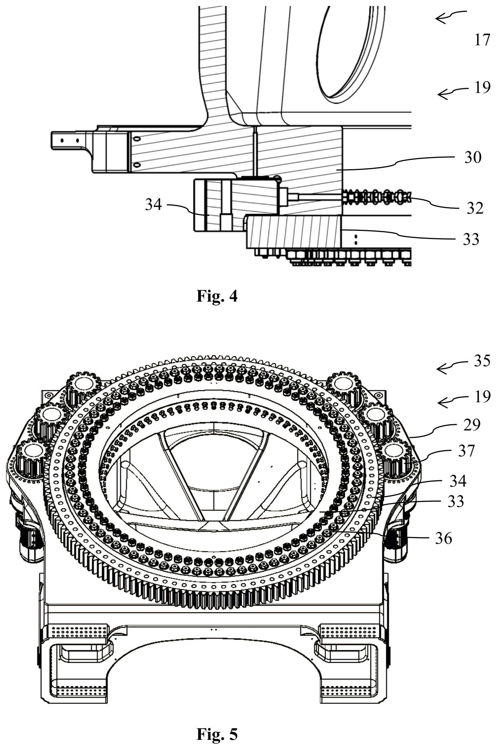

Figure 3 depicts a bottom side view of the main frame 17. As can be seen, the main frame 17 comprises an integrated distance ring 30 for stiffening of main frame 17, wherein the integrated distance ring 30 is extending from the bottom surface 19. Furthermore, the integrated distance ring 30 has additional functions, namely ensuring of design space for gear rim, providing an interface for another structural component and ensuring of coaxial alignment of gear rim. The integrated distance ring 30 has a closed ring shape and is integral formed with the main frame 17. Both are one-piece cast. The integrated distance ring 30 has axial bores 31 for attaching a lock plate (see Fig. 4) and radial bores 32 for aligning and/or positioning components of yaw system 11.

Figure 4 depicts a section view of the main frame 17. Below the integrated distance plate 30 a lock plate 33 is attached for fixing the gear rim 34.

Figure 5 depicts a main frame assembly 35. Latter comprises a mounted lock plate 33 and gear rim 34. The lock plate 33 is fixed with bolts 36 to the integrated distance ring 30. Furthermore, the main frame assembly 35 comprises yaw drives 37 which are mounted to the yaw drive interfaces 29.

### LIST OF REFERENCE SIGNS

- 1: wind turbine
- 2: tower
- 3: nacelle
- 4: drive train chain
- 5: rotor shaft
- 6: rotor
- 7: gear box
- 8: high-speed-shaft
- 9: generator
- 10: electrical components
- 11: yaw system
- 12: rotor blades
- 13: pitch system
- 14: nacelle cover
- 15: spinner
- 16: hub
- 17: main frame
- 18: top surface
- 19: bottom surface
- 20: attachment areas
- 21: stiffening plate
- 22: openings
- 23: stiffening ribs
- 24: recess
- 25: generator-sided end
- 26: stiffening element
- 27: recess
- 28: bores
- 29: yaw drive interfaces
- 30: integrated distance ring
- 31: axial bores
- 32: radial bores
- 33: lock plate
- 34: gear rim
- 35: main frame assembly
- 36: bolts
- 37: yaw drives

1. A support structure for drive train of a wind turbine comprises a top surface (18) and bottom surface (19), **characterized in that** at bottom surface (19) an integrated distance ring (30) for stiffening the main frame (17) is arranged.
2. The support structure for drive train of a wind turbine according to claim 1, wherein the integrated distance ring (30) is integral formed with the main frame (17).
3. The support structure for drive train of a wind turbine according to claim 2, wherein the integrated distance ring (30) and main frame (17) are one-piece cast.
4. The support structure for drive train of a wind turbine according to one of the claims 1 to 3, wherein the integrated distance ring (30) has axial bores for attaching a lock plate (33).
5. The support structure for drive train of a wind turbine according to one of the claims 1 to 4, wherein the integrated distance ring (30) has radial bores for aligning and/or positioning components of yaw system (11).
6. The support structure for drive train of a wind turbine according to one of the claims 1 to 5, wherein on top surface (18) a stiffening plate (21) is arranged.
7. The support structure for drive train of a wind turbine according to one of the claims 1 to 6, wherein between the top and bottom surface (18, 19) at least one stiffening rib (23) is arranged.
8. The support structure for drive train of a wind turbine according to one of the claims 1 to 7, wherein the integrated distance ring (30) has a closed ring shape.
9. A support structure assembly for drive train of a wind turbine comprising the support structure according to one of the claims 1 to 8 and a at least one component of yaw system (11), which is aligned and/or positioned to the integrated distance ring (30).
10. A wind turbine comprising a nacelle (3) which comprises the support structure according to one of the claims 1 to 8.

## Claims

1. A support structure for drive train of a wind turbine comprises a top surface (18) and bottom surface (19), **characterized in that** at bottom surface (19) an integrated distance ring (30) for stiffening the main frame (17) is arranged.

2. The support structure for drive train of a wind turbine according to claim 1, wherein the integrated distance ring (30) is integral formed with the main frame (17).

3. The support structure for drive train of a wind turbine according to claim 2, wherein the integrated distance ring (30) and main frame (17) are one-piece cast.

4. The support structure for drive train of a wind turbine according to one of the claims 1 to 3, wherein the integrated distance ring (30) has axial bores for attaching a lock plate (33).

5. The support structure for drive train of a wind turbine according to one of the claims 1 to 4, wherein the integrated distance ring (30) has radial bores for aligning and/or positioning components of yaw system (11).

6. The support structure for drive train of a wind turbine according to one of the claims 1 to 5, wherein on top surface (18) a stiffening plate (21) is arranged.

7. The support structure for drive train of a wind turbine according to one of the claims 1 to 6, wherein between the top and bottom surface (18, 19) at least one stiffening rib (23) is arranged.

8. The support structure for drive train of a wind turbine according to one of the claims 1 to 7, wherein the integrated distance ring (30) has a closed ring shape.

9. A support structure assembly for drive train of a wind turbine comprising the support structure according to one of the claims 1 to 8 and a at least one component of yaw system (11), which is aligned and/or positioned to the integrated distance ring (30).

10. A wind turbine comprising a nacelle (3) which comprises the support structure according to one of the claims 1 to 8.
